Europäisches Patentamt

European Patent Office

Office européen des brevets

(11) Publication number: 0 389 695
A1

## EUROPEAN PATENT APPLICATION

(21) Application number: 89303020.5

(22) Date of filing: 28.03.89

(51) Int. Cl.5: C08L 29/04, C08L 23/02,
//(C08L23/02,29:04),
(C08L29/04,23:02)

(43) Date of publication of application:
03.10.90 Bulletin 90/40

(84) Designated Contracting States:
AT BE CH DE FR GB IT LI NL SE

(71) Applicant: NESTE OY
Keilaniemi
SF-02150 Espoo(FI)

(72) Inventor: Stjernberg,Maria
Ilomaentie 9 A 16
SF-00840 Helsinki(FI)
Inventor: Bergstrom,Christer
Lohitie 13 B
SF-02170 Espoo(FI)
Inventor: Jaaskelainen,Pirjo
Kaskitie 20
SF-06150 Porvoo(FI)
Inventor: Lindstrom,Helge
Vuorenpeikontie 3
SF-06650 Hamari(FI)
Inventor: Linkoaho,Anssi
Liikkalantie 20
SF-00950 Helsinki(FI)
Inventor: Malm,Bo
Itaranta 11 E 44
SF-02110 Espoo(FI)

(74) Representative: Lamb, John Baxter et al
MARKS & CLERK 57/60 Lincoln's Inn Fields
London WC2A 3LS(GB)

(54) Gastight material.

(57) A gastight material comprises, in admixture, 99-1% by weight of polyolefin and 1-99% by weight of polyvinylalcohol, and, optionally, a plasticizer containing alcoholic groups.

## Gastight material

The present invention concerns a gastight material, and products containing gastight material. The invention particularly concerns a gastight material based on a homopolymer or copolymer containing vinylalcohol, and products containing such.

Impermeable polymers containing vinylalcohol exist, and they are of two kinds in principle: olefine vinylalcohol random copolymers, and olefine/vinylalcohol segment copolymers. The former are usually ethylene/vinylalcohol random copolymers, but propylene/vinylalcohol random copolymers have also been developed.

At the moment, ethylene vinylalcohol random copolymers are manufactured by hydrolyzing ethylene/vinylacetate random copolymer. Hydrolysis (alcoholysis) takes place with the aid of alcohol, and the mixture may be either acid or basic. The hydrolysis may be carried out in solid state, in molten state or in solution.

There is a very great number of patents concerning this procedure for producing ethylene vinylalcohol random copolymer, a review of them being presented in "Reactivity of Ethylene Vinyl Acetate Copolymers: A Critical Evaluation of the Comprehensive Patent Literature on the Acetoxy-Hydroxide Transformation of Ethylene Vinyl Acetate Copolymers". R.J. Koopmas, R. Van der Linden, and E.F. Vansant, Polymer Engineering and Science, July 1982, Vol. 22, No. 10, p. 645. There are two kinds of commercial ethylene vinylalcohol random copolymers. Brands containing 20-30 mol% vinylalcohol are in the first place used in injection moulding and in powder coating steel tubing, and they are produced from ethylene vinylacetate random copolymer produced by high pressure technique. Brands containing 60-80 mol% vinylalcohol are also available in the market, these being mainly used for gastight layers in multilayered products. They are produced by adding ethylene to the polyvinylacetate process and hydrolyzing the product in like manner in which polyvinylalcohol (PVA) is made from polyvinylacetate. If there is less than 60 mol% vinylalcohol, the gastightness of the product goes down steeply. When ethylene/vinylalcohol random copolymer contains over 60 mol% vinylalcohol, it forms monocline crystals (the same as PVA), and when there is less than 20 mol% vinylalcohol, it forms rhombic crystals (the same as polyethylene). In the range between these contents a crystal structure is formed. Only the monocline crystal structure is impervious enough in barrier applications.

Olefine/vinylalcohol segment copolymers can be produced by using reactive compounding technique (compound = a melt-homogenized mixture), as has been disclosed in the same applicant's Finnish patent application No. 845110. In that case a PVA chain is chemically joined to a polyolefine chain e.g. by the aid of hydrolyzable silane. The hydrolyzable silane is first joined to the polyolefine chain by copolymerizing or grafting the unsaturated silane, or by joining to the polyolefine chain another functional hydrolyzable silane, such as aminosilane for instance. The polyolefine that has been modified with hydrolyzable silane is thereafter in molten state with PVA, whereby the silane undergoing hydrolysis reacts chemically with PVA, and an olefine/vinylalcohol segment copolymer is formed.

Polyvinylalcohol (PVA) is mostly used for dispersing agent in PVC suspension polymerizing, and it is possible by controlling the molecular weight of PVA and its degree of hydrolyzation, to control the properties of the PVC. When PVA has a high enough degree of hydrolyzation, it is water-soluble. This water-solubility, and difficulties encountered in processing, restrict the use of PVA in the plastics industry. Dry PVA is interesting in itself because it has excellent barrier properties (gastight). In order to avoid these drawbacks, the above-mentioned ethylene/vinylalcohol random copolymer (EVOH) has been developed. The gastightness of EVOH is, however, dependent on moisture, and therefore an EVOH film must be protected against air humidity e.g. by applying a polyethylene film on both sided. Moreover, EVOH does not as such adhere to polyethylene; an adhesion plastic (e.g. Admer) has to be used between these components in addition. But a five-layer coextrusion design like this is highly exacting and expensive. Also EVOH and adhesion plastics are very high-priced.

EVOH may also be with plastic and it is then less susceptible to moisture. EVOH is for instance admixed to polyethylene terephthalate (PET) and better gastightness of bottles is achieved in this way than by coextrusion. EVOH may also be admixed to polyolefines, whereby sufficient gastightness is obtained, and adhesion to polyolefines at the same time.

In the present invention an easier way has now been found to utilize the good barrier properties of polyvinylalcohol. It has been observed in the invention that mixing of polyvinylalcohol (PVA) with polyolefines, e.g. polyethylene, polypropylene and polybutylene, and with copolymers of these, yields products which have the good barrier properties of polyvinylalcohol but not its drawbacks.

Therefore, the gastight material of the invention is characterized in that it comprises, in mixture, 99-1% by weight polyolefine and 1-99% by weight polyvinylalcohol and, optionally, plasticizer containing alcohol groups.

Advantageously, the material contains at a maximum 10% by weight of plasticizer.

Polyolefine/PVA mixtures are not novel in themselves, but they have not been applied in the form of tight multi-layer products in the way taught by the invention. For instance, polyolefine/PVA mixtures are known in the art of which the hydrophilic properties have been utilized. According to U.S. Patent No. 4,529,539, such mixtures have been impregnated with electrolyte, and electrically conductive plastic products have been obtained in this way. The Japanese Patent No. 60147473 discloses electrically conductive plastic products consisting of polyolefine/PVA/carbon black mixtures, and U.S. Patent No. 3,984,358 discloses ion exchangers consisting of polyolefine/PVA mixtures.

The Japanese Patent No. 77024976 discloses batteries in which between anode and cathode is interposed a polyolefine/PVA mixture serving as drying agent, and according to the Japanese Patent No. 54020057 they have gone so far in developing PVA mixtures that they have been successfully dispersed in water. According to the Japanese Patent No. 70001747, the stainability of polyolefine fibres has been improved by admixing PVA to them. The hygroscopic properties of polyolefine/PVA mixtures have also been usefully applied in coating cement and strengthening cement with polyolefine/PVA fibres (JP 5922328 and JP 79036095). PVA also improves the adhesion to cement.

It has been found in the present invention that PVA may be with polyolefines in molten state in any proportion, and hereby a mixture is obtained which consists of two phases, a continuous phase and a dispersed phase. When the diameter of the dispersed phase is small enough, a transparent film is obtained. Dispersion as good as this is only achieved if the mixing is efficient enough. Normal processing extruders are not good enough in this respect; compounding prior to extruding the final product is required.

When in a mixture of polyolefine and PVA the PVA component forms the continuous phase, good tightness is obtained, e.g. oxygen tightness, and the product is clear and stable in molten as well as solid state, in spite of its being composed of two phases, and it is easy to plasticize by adding plasticizer.

It has also been found that when polyolefine constitutes the continuous phase, excellent adhesion to polyolefines is obtained, and it is possible in this way to produce three-layer products by co-extruding polyolefine/PVA mixture in the middle and equivalent poly olefine, or other polyolefines, on either side. The tightness properties are, however, not as good as in the case that PVA constitutes the continuous phase, in which case adhesion plastic is required between the polyolefine layers and the polyolefine/PVA layer (i.e., five-layer products). Factors influencing the phase structure of PVA and polyolefines are: the proportion of the components, their viscosities, dispersing agents if any, the compounding conditions, and the processing conditions.

As taught by the invention, the polyvinylalcohol may be of the quality commonly used in suspension-polymerizing PVC, and which may be completely hydrolyzed or partly hydrolyzed (with vinylacetate as comonomer), olefine/vinylalcohol random or segment copolymer or equivalent partly hydrolyzed terpolymer, or any other polymer which contains 0.5-100% by weight vinylalcohol.

It has also been found that polyolefine/PVA mixtures are both clearer and more elastic if plasticizer has been added to the mixture. The plasticizers are usually alcohol compounds, which enter the PVA crystals and lower the degree of crystallinity of the PVA and the rigidity and brittleness of PVA and of polyolefine/PVA mixtures. Suitable plasticizers are, for instance, glycerol, trimethylolpropane and triethyleneglycol. The plasticizers may be added by impregnating at elevated temperature either the PVA before compounding or the polyolefine/PVA mixture after compounding, or it may be added in connection with compounding either before melting the polymer components or after melting, or in another way, depending on the type of plasticizer.

The above-mentioned polyolefine/PVA mixtures may be prepared using for polyolefine high pressure polyethylene (LDPE), low pressure polyethylene (HDPE, LMDPE, LLDPE, VLDPE, ULDPE), polypropylene (PP), poly-1-butylene (PB), poly-4-methyl-1-pentene (TPX) or other polyolefine-based plastics, rubbers or additives. It is also possible to use copolymers of the above polymers, such as ethylene-methylacrylate (EMA), ethylene-ethylacrylate (EEA),ethylene-butylacrylate (EBA) and ethylene-vinylacetate (EVA), and propylene-ethylene random or segment copolymers.

The gas tight polyolefine/PVA mixture of the invention for improving barrier properties may be produced by mixing 1-99% by weight polyolefine, 99-1% by weight polyvinylalcohol and optionally plasticizer containing alcohol groups. All requisite components may be added into a melt mixer simultaneously in the form of a dry mix, premixed in solid or molten state, or the different components may be separately added. Plasticizing may also be carried out after compounding. One may also proceed so that the plasticizer is admixed to the PVA component, whereby the advantage is gained that the whole mixture need not be plasticized.

Gastight multi-layer products of the invention may be produced by combining the above polyolefine/PVA mixture with polyolefines, other plastics or other materials, such as fibre-based materials. These multi-layer products may be produced by coextrusion, (co)extrusion coating, (co)extrusion lamination, glue lamination or by another technique, and these manufacturing methods may also be combined.

The conceivable products containing gastight material of the invention include films, blow-moulded bottles and containers, sheets, tubing, injection moulded vessels, deep-drawn films and sheets liquid packaging cartons, etc. As a rule, such tight multi-layer products are used in packaging foodstuffs when oxygen impermeability is desired, but impermeability to carbon dioxide or another gas may also be considered. In addition, tightness against fats, chemicals and odour is required in foodstuff packages as well as technical products.

By the non-restrictive examples following below, the preparation, properties and application in tight single and multi-layer products of polyolefine/PVA mixtures is described. The oxygen permeability of the films was measured with an OX-TRAN 1000 apparatus (ASTM D 3985).

The polyolefine and polyvinylalcohol brands used in the tests in the examples are stated in the Table following below.

| Polyolefines (PO): | | | | |
|---|---|---|---|---|
| PO | Density kg/m$^3$ | Melt Index | | Remarks |
| | | 190°C | 230°C | |
| LDPE1 | 924 | 4.5 | | |
| LDPE2 | 922 | 4.5 | | Contains 1.7% vinyltrimethoxysilane |
| HDPE | 964 | 7 | | |
| LMDPE | 940 | | | |
| PP | | | 4.0 | Homopolymer |
| PB | | 1.4 | | |
| EMA | 936 | 6.0 | | Methylacrylate content 10% |
| EBA | 924 | 2.0 | | Butylacrylate content 17% |
| EVA | 927 | 2.3 | | Vinylacetate content 5% |
| Abbreviations: LDPE = Low density polyethylene | | | | |
| HDPE = High density polyethylene | | | | |
| LMDPE = Linear medium-density polyethylene | | | | |
| PP = Polypropylene | | | | |
| PB = Polybutylene | | | | |
| EMA = Ethylene-methylacrylate copolymer | | | | |
| EBA = Ethylene-butylacrylate copolymer | | | | |
| EVA = Ethylene-vinylacetate copolymer | | | | |

| Polyvinylalcohols (PVA): | | | | |
|---|---|---|---|---|
| PVA | Degree of hydrolysis | Viscosity | Plasticizer | |
| | of basic polymer | | Kind | % by weight |
| | mol% | mPa-s | | |
| PVA1 | 88 | 4 | - | |
| PVA2 | 88 | | Glycerol/water (85:15) | 6 |
| PVA3 | 88 | 4 | Triethyleneglycol | 6 |
| PVA4 | 88 | 4 | Trimethylolpropane | 6 |

Example 1

A barrier compound was produced by mixing polyvinylalcohol (PVA) and polyolefine (PO) in molten state with the aid of a Berstorff mixer, applying the following temperature profile (C): 190-210-220-230-230-160-200-200-200-200; the yield of the mixer was 80 kg/h.

From the compound mixes thus obtained, single layer films with thickness 25 μm were made in a Brabender laboratory extruder. In Table 1 are given the compositions of the films thus obtained, the manufacturing conditions and the oxygen permeability characteristics. The ASTM standard was applied in the measurement, whereby the result is not dependent on whether single layer or multiple layer films are used, when the measurements are carried out in dry condition (humidity 0).

Table 1

| Test | PVA | | PO | | Temp. profile °C | Oxygen perm. $ml/m^2x24hxbar$ |
|------|------|--------|------|--------|------------------|-------------------------------|
| | Type | % b.w. | Type | % b.w. | | |
| 1 | - | - | LDPE1 | 100 | 155-160-165-170 | 10000 |
| 2 | PVA1 | 0.9 | LDPE1 | 89.5 | 160-185-195-195 | 3946 |
| 3 | PVA2 | 40 | LDPE1 | 60 | 160-185-195-195 | 5 |
| 4 | PVA2 | 70 | LDPE1 | 30 | 160-185-200-200 | 2.0 |
| 5 | PVA2 | 90 | LDPE1 | 10 | 160-185-195-195 | 1.8 |
| Note: In Test 2 the compound mix was impregnated with 0.6% by weight of glycerol/water mixture (85:15) prior to running film. | | | | | | |

The results clearly reveal the lowering effect of PVA addition on the oxygen permeability characteristics of polyethylene film. The $O_2$ permeability can be controlled by controlling the PVA quantities.

Example 2

Using a Buss Kokneader mixer (temperature profile 200-200-200°C), polyolefine/polyvinylalcohol compound mixtures were prepared, and single layer films were run from these with a Brabender laboratory extruder. The compositions of the films, the manufacturing conditions and the oxygen permeability characteristics are given in Table 2.

Table 2

| Test | PVA | | PO | | Temp. profile °C | Oxygen perm. $ml/m^2x24hxbar$ |
|------|------|--------|------|--------|------------------|-------------------------------|
| | Type | % b.w. | Type | % b.w. | | |
| 6 | PVA2 | 40 | LMDPE | 60 | 175-175-190-190 | 7.3 |
| 7 | PVA2 | 40 | PP | 60 | 175-185-195-195 | 87 |
| 8 | PVA2 | 40 | PB | 60 | 180-180-195-195 | 9.0 |
| 9 | PVA3 | 40 | LDPE1 | 60 | 165-185-195-195 | 5.8 |
| 10 | PVA4 | 40 | LDPE1 | 60 | 165-185-195-195 | 5.2 |

Example 3

5

As in Example 2, compound mixes were prepared in a Buss Kokneader. From the compound mixes films with 100 μm thickness were made by pressing. The compositions of the films obtained, the manufacturing conditions and the oxygen permeability characteristics are given in Table 3.

Table 3

| Test | PVA | | PO | | Pressing temp. °C | Time | Oxygen perm. ml/m²x24hxbar |
|------|------|--------|------|--------|------|------|------|
| | Type | % b.w. | Type | % b.w. | | | |
| 11 | PVA2 | 40 | HDPE | 60 | 190 | 5 min. | 56 |
| 12 | PVA2 | 40 | EMA | 60 | 190 | 5 min. | 78 |
| 13 | PVA1 | 38 | EBA | 57 | 190 | 5 min. | 66 |
| 14 | PVA2 | 40 | EVA | 60 | 190 | 5 min. | 40 |

Note: In Test 13 the compound mix was prior to film pressing impregnated with 5% by weight of glycerol water mixture (85:15).

The results of Examples 2 and 3 reveal that low permeability is also achieved with other polyolefines and plasticizers.

Example 4

As in Example 1, compound mixes were prepared of polyvinylalcohol (PVA) and polyolefine (PO) with a Berstorff-mixer. With a Reifenhauser three-layer coextruder three-layer film was run which had on one side of the barrier layer an HDPE film and on the other side an LDPE film. The layer thicknesses of the films were 40 μm 20 μm 40 μm. The die was a rotating three-layer die with 200 mm diameter. slit 1 mm, and temperature 220° C. The barrier layer was run with an extruder of following type: screw diameter (D) 50 mm, HDPE screw, length 20xD, length of mixing section 5xD.

The composition of the barrier layer, the oxygen permeability characteristics of the three-layer films that were obtained and the adhesion characteristics are given in Table 4.

Table 4

| Test | PVA | | PO | | Oxygen perm. ml/m²x24hxbar | Adhesion | | Adhesion plastic* |
|------|------|--------|------|--------|------|------|------|------|
| | Type | % b.w. | Type | % b.w. | | HDPE | LDPE | |
| 15 | PVA1** | 38 | LDPE1 | 57 | 2.0 | - | - | + |
| 16 | PVA1 | 40 | LDPE2 | 60 | 217 | + | + | + |
| 17 | PVA1** | 38 | LDPE2 | 57 | 1.9 | - | - | + |

* = 17% EBA grafted with acid
+ = Not detachable from each other, excellent adhesion
- = Separate from each other, no adhesion
** = In Tests 15 and 17, 5% by weight of glycerol/water mixture (85:15) was added to the barrier mix prior to running film.

LDPE2 is more difficult to run, owing to gel formation.

Example 5

By blow-moulding, a bottle was made which had 1000 cm³ capacity and wall structure: HDPE/Adhesion plastic/Barrier/Adhesion plastic/HDPE. The HDPE had melt index (MI) 0.2 and density 958 kg/m$^3$. The barrier material was the material of Test 3 in Example 1, specified in Table 1. For adhesion plastic was used acid-grafted 17% ethylene-butylacrylate copolymer (EBA). A single-layer, 1000 cm$^3$ bottle served as reference bottle.

| Layer | Temperature profile, °C | Rotation speed, cpm |
|---|---|---|
| Outer HDPE | 195-195-190-190-195-195 | 19 |
| Adh | 175-175-175 | 10 |
| Bar | 190-200-210-210 | 25 |
| Adh | 175-175-175 | 10 |
| Inner HDPE | 195-195-190-190-195-195 | 19 |
| Die | 210-205-205 | |

The characteristics of the bottles are given in Table 5

Table 5

| Structure of bottle | Barrier layer thickness, mm | Total thickness, mm | Oxygen permeability ml/bottlex24hxbar |
|---|---|---|---|
| HDPE/Adh/Bar/Adh/HDPE | 0.03 | 0.60 | 0.3 |
| HDPE | - | 0.60 | 4.5 |

## Claims

1. A gastight material, characterized in that it comprises, in admixture, from 99 to 1% by weight of polyolefin and from 1 to 99% by weight of polyvinyl-alcohol, and, optionally, a plasticizer containing alcoholic groups.

2. A gastight material according to claim 1, characterized in that it contains from 0 to 10% by weight of plasticizer.

3. A material according to claim 1 or claim 2, characterized in that the polyolefin is a polyethylene, polypropylene, polybutylene, poly-4-methyl-1-pentene, ethylene-methylacrylate, ethylene-ethylacrylate, ethylene-butylacrylate or ethylene-vinylacetate copolymer, a propylene-ethylene random or block copolymer, or any mixture of two or several of the polymers or copolymers mentioned.

4. A material according to any one of the preceding claims, characterized in that it contains up to 10% by weight of a plasticizer selected from glycerol, trimethylolpropane and triethyleneglycol.

5. A material according to any one of the preceding claims characterized in that it has been prepared in a separate compounding step.

6. A gastight multi-layer material, characterized in that at least one of its layers comprises a mixture as defined in claim 1 or claim 2.

7. A multi-layer material according to claim 6, characterized in that the said layer is joined, on one or both sides, to a layer consisting of polyolefin or other material.

8. A multi-layer material according to claim 7, characterized in that the layer(s) consisting of polyolefin or other material are joined to the gastight layer with the aid of an additional layer improving adhesion.

9. Products containing gastight materials according to any one of the preceding claims.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | WO-A-8 900 501 (NESTE OY) <br> * Page 1, line 31 - page 2, line 33 * | 1-9 | C 08 L 29/04 <br> C 08 L 23/02 // <br> (C 08 L 23/02 <br> C 08 L 29:04 ) <br> (C 08 L 29/04 <br> C 08 L 23:02 ) |
| X | EP-A-0 157 612 (THE CLOROX CO.) <br> * Claims 1,13 * | 1-4 | |
| X | FR-A-2 000 728 (NIPPON GOSEI K.K.) <br> * Claims 1-6 * | 1-15 | |
| X | FR-A-2 292 007 (E.I. DU PONT DE NEMOURS) <br> * Claims 1-3 * | 1-4 | |

TECHNICAL FIELDS
SEARCHED (Int. Cl.5)

C 08 L

The present search report has been drawn up for all claims

| Place of search | Date of completion of the search | Examiner |
|---|---|---|
| THE HAGUE | 05-12-1989 | GOOVAERTS R.E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)